# EUROPÄISCHE PATENTSCHRIFT

(11) **EP 3 440 351 B1**
(45) Veröffentlichungstag und Bekanntmachung des Hinweises auf die Patenterteilung: **26.05.2021**
(21) Anmeldenummer: 17717113.9
(22) Anmeldetag: 06.04.2017
(51) Int. Cl.: F03D 13/20, E04H 12/12, E04B 1/21, E04C 5/16

(54) **WINDENERGIEANLAGEN-TURMRINGSEGMENT, VERFAHREN ZUM HERSTELLEN EINES SOLCHEN UND VERFAHREN ZUM VERBINDEN VON ZWEI WINDENERGIEANLAGEN-TURMRINGSEGMENTEN**
WIND TURBINE TOWER RING SEGMENT, METHOD FOR PRODUCING A WIND TURBINE TOWER RING SEGMENT, AND METHOD FOR CONNECTING TWO WIND TURBINE TOWER RING SEGMENTS
SEGMENT ANNULAIRE DE TOUR D'ÉOLIENNE, PROCÉDÉ DE FABRICATION D'UN SEGMENT ANNULAIRE DE TOUR D'ÉOLIENNE ET PROCÉDÉ DE LIAISON DE DEUX SEGMENTS ANNULAIRES DE TOUR D'ÉOLIENNE

(30) Priorität: 08.04.2016 DE 102016106525
(43) Veröffentlichungstag der Anmeldung: 13.02.2019
(73) Patentinhaber: Wobben Properties GmbH, 26607 Aurich (DE)
(72) Erfinder: WHITE, Wayne, 26386 Wilhelmshaven (DE)
(74) Vertreter: Eisenführ Speiser
(86) Internationale Anmeldenummer: PCT/EP2017/058212
(87) Internationale Veröffentlichungsnummer: WO 2017/174705

(56) Entgegenhaltungen:
- WO-A1-2015/076429
- CN-B- 103 195 668
- CN-U- 204 935 014
- DE-A1-102010 005 991
- JP-A- 2002 054 259
- US-A1- 2007 006 541

## Beschreibung

Die Erfindung betrifft ein Windenergieanlagen-Turmringsegment, einen Windenergieanlagen-Turmabschnitt, einen Windenergieanlagen-Turm und eine Windenergieanlage sowie ein Verfahren zum Herstellen eines Windenergieanlagen-Turmringsegments und zum Verbinden von zwei Windenergieanlagen-Turmringsegmenten.

Eine Windenergieanlage umfasst im Wesentlichen einen Rotor, umfassend mindestens ein Rotorblatt, der sich durch einen Luftstrom rotatorisch bewegt und somit über einen Läufer einen Generator antreibt, wobei der Generator im Allgemeinen innerhalb einer Gondel angeordnet ist. Die Gondel ist vorzugsweise auf einem Turm angeordnet, der entweder als Stahlturm oder als Betonturm, umfassend oder bestehend aus Stahlbeton und/oder Spannbeton, ausgebildet ist. Ein Betonturm ist insbesondere ein Turm, der zum überwiegenden Teil aus Beton gefertigt ist, wobei jedoch Abschnitte auch aus einem anderen Material, vorzugsweise Stahl, hergestellt sein oder dieses Material umfassen können. Ein derartiger Turm weist vorzugsweise eine rohrförmige Geometrie auf, wobei der Durchmesser des Turms entlang seiner longitudinalen Erstreckung zur Gondel hin abnimmt. Der Durchmesser eines Windenergieanlagen-Turms kann bisweilen 8 Meter überschreiten.

Der Turm umfasst in der Regel eine Anzahl von Windenergieanlagen-Turmabschnitten, die eine ringförmige Geometrie mit einer definierten Höhe aufweisen. Die ringausbildende Wandung weist ferner eine Dicke auf. Die Windenergieanlagen-Turmabschnitte sind vorzugsweise entlang der longitudinalen Erstreckung des Turms derart aneinander angeordnet, dass die Stirnflächen im Wesentlichen vollständig einander anliegen.

Die Windenergieanlagen-Turmabschnitte umfassen häufig mehrere Windenergieanlagen-Turmringsegmente, um unter anderem den Transport, insbesondere die Anlieferung der Windenergieanlagen-Turmabschnitte zum Aufstellort der Windenergieanlage, durch Bauteile mit einer geringeren Größe zu vereinfachen. Insbesondere betrifft dies die Windenergieanlagen-Turmabschnitte, die im unteren Bereich des Turms angeordnet sind. Ein Windenergieanlagen-Turmabschnitt kann beispielsweise aus zwei Turmringsegmenten, die beispielsweise jeweils ein 180 Bogengrad Segment des Windenergieanlagen-Turmabschnitts bilden, zusammengesetzt werden. Diese Turmringsegmente sind vorzugsweise als Betonfertigteile industriell vorgefertigt und werden beim Aufbau des Turms am Aufstellort der Windenergieanlage zusammengesetzt und miteinander verbunden.

Die Turmringsegmente werden derart zusammengesetzt, dass diese den ringförmigen Windenergieanlagen-Turmabschnitt bilden. Bei der Verwendung von zwei Segmenten entstehen durch das Zusammensetzen zwei im Wesentlichen vertikal verlaufende Trennfugen. Die Trennfugen entstehen an der Stelle, an der die Turmringsegmente mit ihren jeweils zwei Stoßstellen aneinander stoßen. An diesen Stoßstellen ragen bei bekannten Turmringsegmenten in der Regel abschnittsweise Teile der Bewehrung und/oder Verbindungselemente heraus, damit die Turmringsegmente hier miteinander verbunden werden können. Die Verbindung erfolgt vorzugsweise durch einen Riegel, der die aus einer ersten Stoßstelle heraus ragende Bewehrung eines Turmringsegments mit der aus einer zweiten Stoßstelle heraus ragenden Bewehrung eines weiteren Turmringsegments verbindet. Die verbleibende vertikale Fuge wird im Allgemeinen anschließend vermörtelt.

Die Begriffe Windenergieanlagen-Turmringsegment und Turmringsegment werden, wenn nicht explizit anders erläutert, synonym verwendet. Dies gilt analog für

Windenergieanlagen-Turmabschnitt und Turmabschnitt sowie für Windenergieanlagen-Turm und Turm.

Nachteilig hierbei ist, dass dies mit einem hohen Aufwand sowohl in der Produktion der Teilringsegmente als auch in der Verbindung der Teilringsegmente verbunden ist. Zudem birgt diese Art der Verbindung die Gefahr der Korrosion der Bewehrungs- bzw. Verbindungsabschnitte in diesem Bereich, die selbst bei sorgfältiger Ausführung der Verbindung auftreten kann. Zudem ist die erreichbare Positionierungsgenauigkeit der Teilringsegmente zueinander begrenzt und liegt üblicherweise im Bereich von etwa ± 10 mm. Weiterhin kann beispielsweise das Vermörteln bei tiefen Temperaturen problematisch sein.

Insgesamt unterliegen Verbindungen, insbesondere Schraubverbindungen, für derartige Stöße bzw. die hier entstehenden Fugen in der Regel hohen Anforderungen und aufgrund dessen meist kurzen Wartungsintervallen, die aufgrund der personalintensiven Durchführung mit hohen Kosten einhergehen.

Das Deutsche Patent- und Markenamt hat in der Prioritätsanmeldung zu vorliegender Anmeldung folgenden Stand der Technik recherchiert: DE 10 2010 005 991 A1 und DE 20 2006 017 510 U1. Weiterer Stand der Technik ist in CN 103 195 668 B offenbart.

Der vorliegenden Erfindung liegt somit die Aufgabe zugrunde, ein Windenergieanlagen-Turmringsegment, einen Windenergieanlagen-Turmabschnitt, einen Windenergieanlagen-Turm und eine Windenergieanlage sowie ein Verfahren zum Herstellen eines Windenergieanlagen-Turmringsegments und zum Verbinden von zwei Turmringsegmenten bereitzustellen, welche einen oder mehrere der genannten Nachteile vermindern oder beseitigen. Insbesondere ist es eine Aufgabe der Erfindung ein Windenergieanlagen-Turmringsegment, einen Windenergieanlagen-Turmabschnitt, einen Windenergieanlagen-Turm und eine Windenergieanlage sowie ein Verfahren zum Herstellen eines Windenergieanlagen-Turmringsegments und zum Verbinden von zwei Turmringsegmenten bereitzustellen, welche die Wartungsintensität der Verbindung von Turmringsegmenten für Windenergieanlagen-Türme vermindern.

Beschrieben wird ein Verbindungskörper, nämlich erster Verbindungskörper zum Einlassen in ein Windenergieanlagen-Turmringsegment, umfassend einen Ankerstab mit einem ersten und einem zweiten Ende, einem am ersten Ende des Ankerstabs angeordneten Verbindungsflansch zum Verbinden des Verbindungskörpers mit einem zweiten Verbindungskörper, der in ein weiteres Windenergieanlagen-Turmringsegment eingelassen ist, um hierdurch die beiden Windenergieanlagen-Turmringsegmente zu verbinden, zumindest um deren Verbindung zu unterstützen, und zwei, drei oder mehrere Ankerelemente, die in einem an das zweite Ende angrenzenden Abschnitt des Ankerstabs angeordnet sind.

Der Verbindungskörper ist zum Einlassen in ein Windenergieanlagen-Turmringsegment ausgebildet. Ein Windenergieanlagen-Turm umfasst in der Regel mehrere bestimmungsgemäß übereinander angeordnete Windenergieanlagen-Turmabschnitte, die insbesondere als Mantelsegmente ausgebildet sind und eine ringförmige Geometrie aufweisen. Aufgrund der bisweilen großen Durchmesser der Windenergieanlagen-Turmabschnitte umfassen diese oftmals Windenergieanlagen-Turmringsegmente, die einen Ringabschnitt eines einzelnen Windenergieanlagen-Turmabschnitts darstellen. Windenergieanlagen-Turmabschnitte können zwei oder mehr Windenergieanlagen-Turmringsegmente umfassen, wobei insbesondere der Einsatz von zwei Turmringsegmenten für einen einzelnen Turmabschnitt besonders bevorzugt ist, so dass die Turmringsegmente beispielsweise jeweils ein 180 Bogengrad Segment des Turmabschnitts darstellen. Ein Windenergieanlagen-Turmabschnitt kann aber auch drei oder mehr Turmringsegmente umfassen. Die Turmringsegmente bestehen aus oder umfassen vorzugsweise Beton, insbesondere Stahlbeton und/oder Spannbeton. Die Turmringsegmente werden vorzugsweise derart miteinander verbunden, dass der Windenergieanlagen-Turm die an diesen gestellten Steifigkeitsanforderungen erfüllt.

Der Erfindung liegt die Erkenntnis zugrunde, dass die Kraftverhältnisse in Verbindungen von Turmringsegmenten einen wesentlichen Einfluss auf die notwendige Wartungsintensität haben. Eine geringe Wartungsintensität zeichnet sich unter anderem dadurch aus, dass die Verbindung, insbesondere eine Schraubverbindung, nur sehr selten, das heißt nach sehr vielen Betriebsstunden, überprüft werden muss. Insbesondere Schraubverbindungen müssen bei einer geringen Wartungsintensität lediglich nach sehr vielen Betriebsstunden nachgezogen werden. Bei einer Auslegung der Verbindung derart, dass die Kräfte im Wesentlichen oder ausschließlich in axialer Richtung eines Verbindungselements verlaufen und das Verbindungselement überwiegend eine Zugbelastung erfährt und insbesondere Scher- und/oder Schubbeanspruchungen reduziert werden können, ist eine deutlich verringerte Wartungsintensität gegeben. Dies gilt insbesondere für Schraubverbindungen, wobei die Schraube dann überwiegend oder ausschließlich eine axiale Zugbelastung erfährt.

Das Einlassen des Verbindungskörpers in das Turmringsegment resultiert insbesondere darin, dass ein Teil des Verbindungskörpers im Wesentlichen innerhalb des Turmringsegments, insbesondere innerhalb einer das Turmringsegment ausbildenden Wandung, angeordnet ist. Das Turmringsegment umschließt demnach einen Abschnitt des Verbindungskörpers, so dass der Verbindungskörper im Wesentlichen fest im Turmringsegment verankert ist. Der Verbindungskörper wird vorzugsweise bereits während des Produktionsprozesses des Turmringsegments in dieses eingelassen.

Der Ankerstab des Verbindungskörpers weist ein erstes Ende und ein zweites Ende auf, zwischen denen sich der Ankerstab longitudinal erstreckt. Der Querschnitt des Ankerstabs, orthogonal zu einer im Wesentlichen longitudinalen Achse des Ankerstabs, ist vorzugsweise rechteckig mit einer Quererstreckung, welche im Wesentlichen orthogonal zur Längserstreckung ausgerichtet ist, und mit einer Dicke, welche im Wesentlichen orthogonal zur Längserstreckung und orthogonal zur Quererstreckung ausgerichtet ist. Die Dicke kann eine deutlich geringere Abmessung aufweisen als die der Quererstreckung, so dass der Ankerstab als langgezogene Platte ausgebildet ist. Ferner vorzugsweise weist die Dicke eine Abmessung auf, die geringer ist als die der Quererstreckung. Darüber hinaus kann die Dicke die gleiche Abmessung aufweisen wie die der Querstreckung, so dass der Ankerstab einen quadratischen Querschnitt aufweist. Ferner vorzugsweise weist die Dicke eine Abmessung auf die größer ist als die der Quererstreckung. Ferner vorzugsweise kann der Querschnitt des Ankerstabs mehreckig, rund, oval oder geometrisch undefiniert ausgebildet sein.

Am ersten Ende des Ankerstabs ist der Verbindungsflansch angeordnet. Der Verbindungsflansch ist ausgebildet, um den Verbindungskörper mit einem zweiten Verbindungskörper, der in ein weiteres Windenergieanlagen-Turmringsegment eingelassen ist, zu verbinden. Der Verbindungsflansch ist vorzugsweise als ein im Wesentlichen rechteckiges Element ausgebildet, das eine Flanschquerstreckung parallel zur Querstreckung des Ankerstabs, eine Höhe parallel zur Dicke des Ankerstabs und eine Flanschdicke parallel zur Längserstreckung des Ankerstabs aufweist. Dabei weist vorzugsweise die Flanschquerstreckung eine größere Abmessung auf als die Querstreckung des Ankerstabs und/oder vorzugsweise die Höhe weist eine größere Abmessung auf als die Dicke des Ankerstabs. Die Flanschquerstreckung und die Höhe des Verbindungsflansches bilden eine flächige Erstreckung aus, deren Flächennormale im Wesentlichen parallel zu longitudinalen Erstreckung des Ankerstabs verläuft.

Ferner ist der Ankerstab vorzugsweise mittig an der flächigen Erstreckung des Verbindungsflansches angeordnet, wobei sich dies auf die Mitte der Quererstreckung und/oder auf die Mitte der Höhe beziehen kann. Die Erstreckungen des Verbindungsflansches können auch nicht parallel zu den zuvor genannten Erstreckungen des Ankerstabs verlaufen, so dass zwischen diesen jeweils ein Winkel ungleich null Bogengrad besteht. Der Verbindungsflansch kann darüber hinaus auch einen quadratischen, dreieckigen, mehreckigen oder ovalen Querschnitt aufweisen. Alternativ vorzugsweise weist der Verbindungsflansch einen runden Querschnitt, insbesondere einen kreisrunden Querschnitt, auf.

Die äußere Umfangsfläche des Verbindungsflansches ist vorzugsweise abschnittsweise oder vollständig weiter von der Mittelachse des Ankerstabs beabstandet als die Außenumfangsfläche des Ankerstabs. Insbesondere sind diese derart beabstandet, dass durch vorzugsweise im Verbindungsflansch enthaltene Öffnungen Befestigungsmittel hindurchgeführt werden können. Die Dicke des Verbindungsflansches ist vorzugsweise derart bemessen, dass dieser die Kräfte zur Verbindung von zwei Turmringsegmenten aufnehmen kann. Dies gilt insbesondere für die Kräfte während der Montage des Turms und für die Kräfte während des Betriebs der Windenergieanlage.

Der Verbindungsflansch weist ferner vorzugsweise Öffnungen auf, die dazu ausgebildet sind Befestigungsmittel aufzunehmen. Die Öffnungen weisen zu diesem Zweck orthogonal zu ihrer Durchdringungsrichtung einen vorzugsweise kreisrunden Querschnitt auf. Ferner vorzugsweise ist dieser Querschnitt schlitzförmig oder mehreckig. Die Öffnungen können ferner eine Durchdringungsrichtung aufweisen, die im Wesentlichen parallel zu einer Flächennormalen der flächigen Erstreckung des Verbindungsflansches und somit auch im Wesentlichen parallel zur longitudinalen Erstreckung des Ankerstabs ist.

Der Verbindungsflansch ist mit dem ersten Ende des Ankerstabs vorzugsweise unlösbar und alternativ vorzugsweise lösbar verbunden. Die unlösbare Verbindung kann beispielsweise mittels einer Schweißverbindung hergestellt werden. Ferner kann die Verbindung bereits im Produktionsprozess des Ankerstabs und des Verbindungsflansches hergestellt worden sein, beispielsweise indem die zwei

Komponenten aus einem Guss sind und/oder aus einem einzelnen Stück Ausgangsmaterial hergestellt sind. Die lösbare Verbindung erfolgt vorzugsweise mittels einer Schraub- oder Bolzenverbindung. Ferner kann die Verbindung mit einer Nut-Feder-Verbindung, einer Passfeder, einer Schwalbenschwanzverbindung und/oder einem Verbindungsbeschlag erfolgen. Darüber hinaus besteht die Möglichkeit einer formschlüssigen Verbindung, die beispielsweise über einen Anschlag am ersten Ende des Ankerstabs ausgebildet werden kann.

Darüber hinaus kann für die Verbindung des Ankerstabs mit dem Verbindungsflansch auch ein drittes Bauteil verwendet werden, das den Ankerstab und den Verbindungsflansch durch eine lösbare oder unlösbare Verbindung miteinander verbindet. Die Verbindung des Verbindungsflansches mit dem Ankerstab ist insbesondere derart bemessen, dass diese die Kräfte zur Verbindung von zwei Turmringsegmenten aufnehmen kann. Dies gilt für die Kräfte während der Montage des Turms und für die Kräfte während des Betriebs der Windenergieanlage.

Der Verbindungskörper weist zwei, drei oder mehrere Ankerelemente auf, die in einem an das zweite Ende angrenzenden Abschnitt des Ankerstabs angeordnet sind, so dass sich die Ankerelemente vorzugsweise in einem in das Turmringsegment eingelassenen Abschnitt des Ankerstabs befinden. Die Ankerelemente dienen insbesondere der Verankerung des Ankerstabs im Turmringsegment, so dass der Ankerstab insbesondere in Längsrichtung eine hohe Zugkraft, angreifend am ersten Ende des Ankerstabs, aufnehmen kann und infolgedessen, trotz einer Beaufschlagung mit einer Zugkraft, keine wesentliche Bewegung in Längsrichtung ausführt. Die Ankerelemente sind vorzugsweise im Wesentlichen parallel zu einer Längsachse eines Windenergieanlagen-Turms und ferner vorzugsweise orthogonal zu einer Längsachse des Ankerstabs ausgerichtet.

Um eine sichere Verankerung des Ankerstabs in dem Turmringsegment durch die Ankerelemente zu gewährleisten, bedarf es einer entsprechenden Befestigung der Ankerelemente an dem Ankerstab. Vorzugsweise sind die Ankerelemente derart an dem Ankerstab befestigt, dass eine auf den Ankerstab wirkende Zugkraft, insbesondere am ersten Ende wirkende Zugkraft, in die Ankerelemente und über diese in das Turmringsegment eingeleitet wird. Die Ankerelemente sind daher vorzugsweise unlösbar und starr jeweils mit dem Ankerstab verbunden, beispielsweise mittels einer Schweißverbindung.

Das Material des Verbindungskörpers ist vorzugsweise insbesondere für die Aufnahme von Zugkräften und für das Einlassen in Beton enthaltende Körper geeignet. Vorzugsweise umfasst der Verbindungskörper oder umfassen einzelne Bestandteile des Verbindungskörpers ein metallisches Material, vorzugsweise Stahl, insbesondere rostfreier Stahl, und/oder ein Nicht-Eisen Metall, oder besteht bzw. bestehen aus einem dieser Materialien oder einer Kombination dieser Materialien. Alternativ vorzugsweise umfasst der Verbindungskörper oder umfassen einzelne Bestandteile des Verbindungskörpers einen oder mehrere Kunststoffe oder besteht bzw. bestehen aus einem oder mehreren Kunststoffen. Ferner vorzugsweise umfassen die Ankerstäbe und/oder Verbindungsflansche und/oder Ankerelemente unterschiedliche Materialien oder bestehen aus diesen.

Das Anwendungsfeld des Verbindungskörpers kann über die Verbindung von Turmringsegmenten hinaus gehen. Es ist ferner möglich, dass die Verbindungskörper eingesetzt werden, um zwei Windenergieanlagen-Turmabschnitte, die vertikal benachbart zueinander angeordnet sind und einen horizontalen Stoß ausbilden, miteinander zu verbinden. Zu diesem Zweck sind die Verbindungskörper in den Windenergieanlagen-Turmabschnitte im Wesentlichen parallel zur Längserstreckung des Turmes angeordnet, so dass eine Verbindung der Verbindungskörper in einer Kraftrichtung resultiert, die im Wesentlichen parallel zur Erstreckung des Turmes verläuft. Für diesen Anwendungsfall gelten die übrigen hier beschriebenen Ausführungen entsprechend, jedoch mit den entsprechenden Anpassungen bezogen auf die 90° gedrehte Einbaulage, insbesondere hinsichtlich Ausführungen, die auf horizontale, vertikale, untere und/oder obere Ausrichtungen etc. Bezug nehmen.

In einer bevorzugten Ausführungsvariante des Verbindungskörpers ist vorgesehen, dass sich die Ankerelemente im Wesentlichen orthogonal von einer Längsachse des Ankerstabs hinweg erstrecken. Die Ankerelemente erstrecken sich demnach im 90 Bogengrad Winkel von einer Längsachse des Ankerstabs hinweg. Vorzugsweise erstrecken sich jeweils zwei Ankerelemente in Längsrichtung an der gleichen Stelle des Ankerstabs in zwei entgegengesetzte, parallel verlaufende Richtungen von dem Ankerstab hinweg. Alternativ vorzugsweise erstrecken sich jeweils zwei Ankerelemente in Längsrichtung des Ankerstabs versetzt in zwei entgegengesetzte, parallel verlaufende Richtungen von dem Ankerstab hinweg. Die Erstreckungen der Ankerelemente können demnach stets parallel sein. Alternativ vorzugsweise sind die Erstreckungen nicht parallel, vorzugsweise rechtwinklig zueinander, verlaufend. Die zu einer Längsachse des Ankerstabs orthogonale Anordnung der Ankerelemente ist insbesondere dahingehend vorteilhaft, da somit die Verbindung des Verbindungskörpers und des Turmringsegments besonderes stark versteift wird.

Die Ankerelemente sind als Kopfbolzen ausgebildet. Kopfbolzen, auch als Kopfbolzendübel bezeichnet, sind in der Regel Elemente mit einem Stift, der orthogonal zu seiner Längsachse einen vorzugsweise runden Querschnitt aufweist, der an einem Ende seiner Längserstreckung eine Verdickung dieses Querschnitts aufweist. Mit dem anderen Ende seiner Längserstreckung ist der Kopfbolzen vorzugsweise an dem Ankerstab befestigt, wobei diese Befestigung vorzugsweise unlösbar oder alternativ vorzugsweise lösbar gestaltet ist. Besonders bevorzugt ist eine schweißtechnische Verbindung, wobei hier insbesondere das Lichtbogenbolzenschweißen eingesetzt wird. Die Kopfbolzen sind vorzugsweise aus einem metallischen Material, insbesondere aus einem Stahl, besonders bevorzugt aus einem nicht-rostenden Material, hergestellt. Ferner vorzugsweise sind die Kopfbolzen aus einem Kunststoff hergestellt.

Eine bevorzugte Ausführungsvariante sieht vor, dass auf einer oberen Seite des Ankerstabs und auf einer unteren Seite des Ankerstabs jeweils eine gleiche Anzahl von Ankerelementen, vorzugsweise gegenüberliegend, angeordnet ist. Die obere Seite des Ankerstabs weist eine Flächennormale auf, die im Wesentlichen parallel zu einer Längsachse des Windenergieanlagen-Turms verläuft und diese Fläche im montierten Zustand der Windenergieanlage der Gondel der Windenergieanlage zugewandt ist. Die untere Seite des Ankerstabs weist eine Flächennormale auf, die im Wesentlichen parallel zu einer Längsachse des Windenergieanlagen-Turms verläuft und diese Fläche im montierten Zustand der Windenergieanlage dem Fundament der Windenergieanlage zugewandt ist. Bevorzugt ist, dass jeweils zwei Ankerelemente, von denen eins auf der oberen Seite und eins auf der unteren Seite angeordnet sind, die gleiche Längsachse aufweisen, so dass diese gegenüberliegend angeordnet sind.

Eine besonders bevorzugte Ausführungsvariante sieht vor, dass der Verbindungsflansch zwei Öffnungen aufweist, die ausgebildet sind, jeweils von einem Befestigungsmittel durchdrungen zu werden. Die Öffnungen weisen vorzugsweise eine Durchdringungsrichtung auf, die im Wesentlichen parallel zur Längserstreckung des Ankerstabs verläuft. Die Öffnungen weisen ferner vorzugsweise einen Querschnitt orthogonal zur Durchtrittsrichtung auf, der bevorzugt rund, insbesondere kreisrund, ist. Alternativ vorzugsweise ist der Querschnitt schlitzförmig oder eckig ausgebildet. Vorgesehene Befestigungsmittel können diese Öffnungen durchdringen.

Die Öffnungen sind bevorzugt als Durchgangsöffnungen ausgebildet, so dass diese einen Eintrittsbereich und einen vom Eintrittsbereich verschiedenen Austrittsbereich aufweisen. Ferner vorzugsweise sind die Öffnungen als Sacköffnungen, vorzugsweise als Sackbohrungen, ausgebildet. Besonders bevorzugt ist die Anordnung der zwei Öffnungen, dass ein durch diese Öffnungen geführtes Befestigungsmittel im Montage- und im Betriebszustand von einem Bediener, beispielsweise zu Wartungszwecken, erreichbar ist. Insbesondere ist das Befestigungsmittel mit einem Befestigungsgerät oder dergleichen zu erreichen.

Die hier beschriebene Geometrie des Verbindungskörpers umfasst im Sinne dieser Anmeldung auch solche Ausgestaltungen, bei denen die Form angepasst ist auf die Ringform des Turmringsegments bzw. des Turmabschnitts und etwa der Ankerstab des Verbindungskörpers entsprechend in Umfangsrichtung des Turmringsegments bzw. des Turmabschnitts ausgerichtet ist. Aufgrund des in der Regel im Vergleich zu den Abmessungen des Verbindungskörpers deutlich größeren Radius eines Teilringsegments bzw. Turmabschnitts lassen sich jedoch auch diese Ausführungen unter die hier beschriebenen Geometrien fassen. Angaben wie orthogonal und andere geometrische Angaben sind bei einer auf die Ringform des Turmringsegments bzw. des Turmabschnitts angepassten Ausgestaltung entsprechend angepasst zu verstehen.

In einer weiteren bevorzugten Ausführungsvariante ist vorgesehen, dass die Öffnungen des Verbindungsflansches jeweils ein Innengewinde aufweisen. Das Innengewinde ist insbesondere an oder in einer Innenumfangsfläche der Öffnungen des Verbindungsflansches angebracht. Das Innengewinde dient insbesondere zur Aufnahme eines Befestigungsmittels, wobei dieses Befestigungsmittel vorzugsweise einen kreisrunden Querschnitt mit einer Außenumfangsfläche aufweist. Insbesondere weist diese Außenumfangsfläche ein zum Innengewinde korrespondierendes Außengewinde auf. Das Innengewinde erstreckt sich vorzugsweise vollständig von einem Eintrittsbereich bis zu einem Austrittsbereich der Öffnung, so dass ein Befestigungsmittel mit einem korrespondierenden Außengewinde teilweise oder vollständig durch die Öffnung hindurch und/oder in diese hinein geschraubt werden kann.

Der Ankerstab weist orthogonal zu seiner Längsachse einen rechteckigen Querschnitt auf.

Ein rechteckiger Querschnitt weist vorzugsweise vier gleiche Winkel auf, die jeweils von zwei Kanten des Ankerstabquerschnitts gebildet werden. Von den vier Kanten des Ankerstabquerschnitts weisen jeweils die gegenüberliegenden Kanten vorzugsweise die gleiche Abmessung auf.

Eine weitere besonders bevorzugte Ausführungsvariante sieht vor, dass der Verbindungsflansch und/oder die Ankerelemente stoffschlüssig mit dem Ankerstab verbunden sind, vorzugsweise durch Schweißen. Die stoffschlüssige Verbindung verbindet die Fügepartner derart, dass die Fügepartner durch atomare und/oder molekulare Kräfte zusammengehalten werden. Stoffschlüssige Verbindungen können beispielsweise durch Löten, Kleben, Vulkanisieren und/oder Schweißen erzeugt werden. Das Schweißen und die Unterarten des Schweißens, insbesondere das Schmelzschweißen und Pressschweißen, sind besonders geeignet, um die meisten metallischen Materialien zu fügen.

In einer weiteren bevorzugten Ausführungsvariante ist vorgesehen, dass der Verbindungsflansch und/oder die Ankerelemente und/oder der Ankerstab Stahl aufweisen oder aus Stahl bestehen. Ferner ist insbesondere bevorzugt, dass der Verbindungsflansch und/oder die Ankerelemente und/oder der Ankerstab Gusswerkstoffe bzw. Gussmaterialien umfasst oder daraus besteht. Ferner kann der Verbindungsflansch und/oder die Ankerelemente und/oder der Ankerstab aus Nicht-Eisen- (NE-) Metallen, wie beispielsweise speziellen Legierungen, bestehen oder diese umfassen. Ferner vorzugsweise kann der Verbindungsflansch und/oder die Ankerelemente und/oder der Ankerstab aus Kunststoff bestehen oder diesen umfassen, wobei insbesondere Kunststoffe mit einer hohen Zugfestigkeit, beispielsweise faserverstärkte Kunststoffe, bevorzugt sind. Ferner kann der Verbindungsflansch und/oder die Ankerelemente und/oder der Ankerstab aus Beton, insbesondere hochfestem Beton, bestehen oder diesen umfassen.

Gemäß der Erfindung wird die eingangs genannte Aufgabe gelöst durch ein Windenergieanlagen-Turmringsegment nach Anspruch 1. Das Turmringsegment ist als Mantelsegment, und vorzugsweise als Betonkörper, ausgebildet mit zwei Stoßstellen zum Ansetzen an Stoßstellen wenigstens eines weiteren Turmringsegments, und mit mindestens einer Aussparung im Bereich jeder Stoßstelle, wobei in das Turmringsegment im Bereich jeder Stoßstelle jeweils ein Verbindungskörper nach mindestens einer der vorhergehend beschriebenen Ausführungsvarianten derart eingelassen ist, dass ein zweites Ende eines Ankerstabs mit Ankerelementen im Turmringsegment verborgen ist und ein erstes Ende des Ankerstabs mit einem Verbindungsflansch in die Aussparung herausragt.

Das vorzugsweise als Betonkörper ausgebildete Windenergieanlagen-Turmringsegment ist insbesondere ein bewehrter Betonkörper und insbesondere ein Stahlbeton- und/oder Spannbetonkörper. Ferner vorzugsweise liegt das Windenergieanlagen-Turmringsegment als Betonfertigteil vor, das insbesondere industriell vorgefertigt ist.

Das Turmringsegment stößt an mindestens zwei im Wesentlichen vertikalen Stoßstellen an ein weiteres Turmringsegment. Die mindestens zwei vertikalen Stöße weisen dabei vorzugsweise und im Wesentlichen die gleiche vertikale Abmessung auf wie die Höhe des Turmabschnitts. An den Stoßstellen ist jeweils mindestens eine Aussparung vorhanden, die vorzugsweise zum einen Teil im ersten Turmringsegment und zum anderen Teil im zweiten Turmringsegment angeordnet ist. In die Aussparung ragen zwei erste Enden von Verbindungskörpern, die jeweils in zwei unterschiedlichen, vorzugsweise benachbarten, Turmringsegmenten eingelassen sind. Die an den ersten Enden angeordneten Verbindungsflansche dienen dazu, die Turmringsegmente miteinander zu verbinden, indem die Verbindungsflansche durch ein Befestigungsmittel miteinander verbunden werden.

Gemäß einem weiteren Aspekt der Erfindung wird die eingangs genannte Aufgabe gelöst durch einen Windenergieanlagen-Turmabschnitt nach Anspruch 7. Der Windenergieanlagen-Turmabschnitt umfasst mindestens ein erstes und ein zweites Turmringsegment nach dem vorhergehenden Aspekt, wobei die beiden Turmringsegmente jeweils als Mantelsegment, und vorzugsweise als Betonkörper, ausgebildet sind und mit ihren Stoßstellen an mindestens einem im Wesentlichen vertikalen Stoß aneinanderstoßen, wobei in das erste und das zweite Turmringsegment im Bereich jeder Stoßstelle jeweils ein Verbindungskörper nach mindestens einer der zuvor beschriebenen Ausführungsvarianten derart eingelassen ist, dass ein zweites Ende eines Ankerstabs mit Ankerelementen im Turmringsegment verborgen ist und ein erstes Ende des Ankerstabs mit einem Verbindungsflansch in die Aussparung herausragt, und wobei im Bereich des Stoßes die Verbindungsflansche der Verbindungskörper der ersten und zweiten Turmringsegmente miteinander verbunden sind.

Der Turmabschnitt ist vorzugsweise als Turmring ausgebildet, welcher einen vollständigen Kreis ausbildet und orthogonal zu einem Radius des Turmrings eine Höhe aufweist. Der Turmring wird vorzugsweise im Wesentlichen durch eine Wandung gebildet, wobei eine Außenumfangsfläche und eine Innenumfangsfläche ausgebildet werden. Der Turmabschnitt umfasst ferner mindestens das erste und das zweite Turmringsegment, die im Falle von insgesamt zwei Turmringsegmenten jeweils beispielswese eine Winkelerstreckung von 180 Bogengrad aufweisen. Es besteht darüber hinaus die Möglichkeit, dass der Turmabschnitt auch mehr als zwei Turmringsegmente umfasst, wobei die Turmringsegmente vorzugsweise in Summe eine Winkelerstreckung von 360 Bogengrad aufweisen. Eine Teilung des Turmabschnitts in Turmringsegmente bietet insbesondere den Vorteil eines vereinfachten Transports, da Turmabschnitte mit bestimmten Durchmessern nicht mehr konventionell auf den üblichen Transportwegen befördert werden können.

Die Turmringsegmente sind vorzugsweise jeweils als Mantelsegment, vorzugsweise als Betonkörper, ausgebildet. Der bevorzugte Betonkörper ist ferner vorzugsweise als bewehrter Betonkörper, insbesondere als Stahlbeton- und/oder Spannbetonkörper, ausgebildet. Darüber hinaus kann der bevorzugte Betonkörper vorzugsweise als Betonfertigteil vorgesehen werden, so dass dieser industriell vorgefertigt werden kann.

Die Turmringsegmente stoßen mit ihren Stoßstellen an mindestens einem im Wesentlichen vertikalen Stoß aneinander. Der mindestens eine vertikale Stoß weist dabei eine vorzugsweise und im Wesentlichen gleiche vertikale Abmessung auf wie die Höhe des Turmabschnitts. Im Falle von zwei Turmringsegmenten, mit beispielsweise jeweils 180 Bogengrad Winkelerstreckung, umfasst der Turmabschnitt insgesamt zwei im Wesentlichen vertikale Stöße. Die Zahl der Stöße pro Turmabschnitt erhöht sich dementsprechend mit einer steigenden Anzahl an Turmringsegmenten pro Turmabschnitt.

Im Bereich des Stoßes ist eine Aussparung angeordnet. Die Aussparung ist vorzugsweise zur einen Hälfte in dem am Stoß angrenzenden ersten Turmringsegment und zur anderen Hälfte in dem am Stoß angrenzenden zweiten Turmringsegment angeordnet. Die Aussparung weist vorzugsweise eine an den Verbindungskörper angepasste geometrische Form, beispielsweise eine quaderförmige Form, auf, wobei die Abmessungen der Aussparung vorzugsweise derart groß sind, dass die Verbindungsflansche im montierten Zustand keine Berührung mit der Umrandung der Aussparung haben. Dies ist insbesondere dahingehend vorteilhaft, da die Verbindung somit im Wesentlichen eine Zugbelastung erfährt und unter Berücksichtigung der oben beschriebenen Erkenntnis eine wartungsarme Verbindung ermöglicht.

Der Verbindungskörper des Windenergieanlagen-Turmabschnitts ist wie zuvor beschrieben ausgebildet. In einer weiteren Ausführungsvariante ist an einem Stoß mehr als eine Aussparung vorgesehen. Dies ist insbesondere bevorzugt, wenn der Turmabschnitt eine Höhe aufweist, die das Vorsehen von mehr als einer Aussparung ermöglicht. Die Aussparungen an einem einzelnen Stoß sind vorzugsweise vertikal übereinander angeordnet und weisen vorzugsweise jeweils eine vertikale Beabstandung auf.

Erfindungsgemäß ragen die ersten Enden der Verbindungskörper des ersten und des zweiten Turmringsegments in die Aussparung hinein, so dass die an den ersten Enden angeordneten Verbindungsflansche miteinander verbunden werden können.

Eine bevorzugte Ausführungsvariante des Windenergieanlagen-Turmabschnitts sieht vor, dass die Verbindungsflansche der Verbindungskörper der ersten und zweiten Turmringsegmente über Befestigungsmittel, vorzugsweise lösbar, miteinander verbunden sind bzw. werden. Die Verbindungsflansche weisen vorzugsweise jeweils Öffnungen auf, insbesondere jeweils zwei Öffnungen, die von einem Befestigungsmittel durchdrungen werden können. Jeweils eine Öffnung des einen Verbindungsflansches weist vorzugsweise dieselbe Mittelachse auf wie eine Öffnung des anderen Verbindungsflansches, so dass diese zwei Öffnungen vorzugsweise und im Wesentlichen koaxial angeordnet sind.. Durch zwei koaxial angeordnete Öffnungen wird das Befestigungsmittel vorzugsweise eingeführt. Besonders bevorzugt ist ein lösbares Befestigungsmittel, wobei dieses insbesondere als schraubbares Befestigungsmittel ausgebildet ist.

Gemäß einem weiteren Aspekt der Erfindung wird die eingangs genannte Aufgabe gelöst durch einen Windenergieanlagen-Turm nach Anspruch 9 umfassend mehrere bestimmungsgemäß übereinander angeordnete Windenergieanlagen-Turmabschnitte nach mindestens einem der zuvor genannten Aspekte, wobei vorzugsweise die Stöße benachbarter Turmabschnitte zueinander versetzt angesetzt sind. Versetzt bedeutet, dass die Fugen der Stöße von zwei übereinander angeordneten Turmabschnitten nicht vertikal übereinander angeordnet sind. Versetzt zueinander angeordnete Stöße können die Steifigkeit des Turms erhöhen.

Gemäß einem weiteren Aspekt der Erfindung wird die eingangs genannte Aufgabe gelöst durch eine Windenergieanlage nach Anspruch 10, umfassend einen Windenergieanlagen-Turm nach dem zuvor beschriebenen Aspekt. Die Windenergieanlage umfasst in der Regel neben dem

Turm eine auf dem Turm angeordnete Gondel mit einem aerodynamischen Rotor mit meist drei Rotorblättern und vorzugsweise einem Spinner. Der aerodynamische Rotor wird in der Regel im Betrieb der Windenergieanlage durch den Wind in eine Drehbewegung versetzt und dreht in der Regel somit auch einen Rotor oder Läufer eines Generators, welcher in der Regel direkt oder indirekt mit dem aerodynamischen Rotor gekoppelt sein kann. Der elektrische Generator ist meist in der Gondel angeordnet, um elektrische Energie zu erzeugen.

Gemäß einem weiteren Aspekt der Erfindung wird die eingangs genannte Aufgabe gelöst durch ein Verfahren nach Anspruch 11 zum Herstellen eines Windenergieanlagen-Turmringsegments nach mindestens einem der zuvor beschriebenen Aspekte. Das Verfahren umfasst ein Vorbereiten einer Betonform oder Schalung zum Fertigen eines Turmringsegments, ein Bereitstellen eines zuvor beschriebenen Verbindungskörpers, ein Positionieren des Verbindungskörpers in der Betonform oder Schalung derart, dass ein erstes Ende eines Ankerstabs des Verbindungskörpers mit einem Verbindungsflansch aus einer im Bereich einer Stoßstelle angeordneten Aussparung hinausragt, ein Ausfüllen der Betonform oder Schalung mit Beton, ein Aushärten lassen des Betons, und ein Entnehmen des Turmringsegments aus der Betonform oder Schalung.

Besonders bevorzugt ist die Nutzung eines bewehrten Betons, wobei vorzugsweise die Bewehrung positioniert wird bevor die Betonform und/oder Schalung mit Beton ausgefüllt und/oder aufgefüllt wird. Gegebenenfalls können auch mehrere Turmsegmente gleichzeitig gefertigt werden, die nach deren Aushärtung und der Entnahme voneinander getrennt werden, wobei die Turmringsegmente vorzugsweise in der Betonform oder der Schalung derart zueinander angeordnet sind, wie diese bestimmungsgemäß in einem Windenenergieanlagen-Turmabschnitt und/oder Windenenergieanlagen-Turm angeordnet sind.

Gemäß einem weiteren Aspekt der Erfindung wird die eingangs genannte Aufgabe gelöst durch ein Verfahren nach Anspruch 12 zum Verbinden von zwei Turmringsegmenten zu einem Windenergieanlagen-Turmabschnitt nach mindestens einem der zuvor beschriebenen Aspekte umfassend ein Bereitstellen von mindestens einem ersten und einem zweiten Windenergieanlagen-Turmringsegment nach mindestens einem der zuvor beschriebenen Aspekte und ein Verbinden der beiden Verbindungsflansche des ersten und des zweiten

Windenergieanlagen-Turmringsegments miteinander. Das Verbinden der beiden Verbindungsflansche miteinander erfolgt vorzugsweise mit einem Befestigungsmittel, insbesondere mittels einer Schraubverbindung.

Beschrieben wird ferner ein Verfahren zum Verbinden von zwei Windenergieanlagen-Turmabschnitten, die vertikal benachbart zueinander angeordnet sind und einen horizontalen Stoß ausbilden. Zu diesem Zweck sind die Verbindungskörper in den Windenergieanlagen-Turmabschnitten im Wesentlichen parallel zur Längserstreckung des Turmes angeordnet, so dass eine Verbindung der Verbindungskörper in einer Kraftrichtung resultiert, die im Wesentlichen parallel zur Erstreckung des Turmes verläuft. Für diesen Anwendungsfall gelten die übrigen hier beschriebenen Ausführungen entsprechend, jedoch mit den ensprechenden Anpassungen bezogen auf die 90° gedrehte Einbaulage, insbesondere hinsichtlich Ausführungen, die auf horizontale, vertikale, untere und/oder obere Ausrichtungen etc. Bezug nehmen.

Beschrieben wird ferner eine Montagevorrichtung für einen zuvor beschriebenen Verbindungskörper mit einem ersten Montageelement, umfassend einen ersten Anschlag an dem mindestens zwei erste Stempel voneinander beabstandet an der gleichen Seite des ersten Anschlags angeordnet sind, einem zweiten Montageelement, umfassend einen zweiten Anschlag an dem mindestens zwei zweite Stempel voneinander beabstandet an der gleichen Seite des zweiten Anschlags angeordnet sind, wobei die ersten und zweiten Stempel derart gegenüberliegend angeordnet und ausgebildet sind, Ankerstäbe zweier verbundener Verbindungskörper in orthogonaler Richtung zwischen dem ersten und zweiten Anschlag einzuklemmen.

Die Montagevorrichtung dient insbesondere dazu, im Montagezustand Kräfte, insbesondere Schubkräfte, aufzunehmen, von denen die Verbindung im Betriebszustand im Wesentlichen frei sein soll. Im Montagezustand, wenn beispielsweise verbundene Turmringsegmente versetzt oder bewegt werden sollen, kann es jedoch sinnvoll und gewünscht sein, diese Kräfte zu übertragen, um eine hohe Stabilität der Verbindung auch in dieser Richtung zu gewährleisten. Im fertigen Einbauzustand nach Beendigung der Montage wird die Montagevorrichtung vorzugsweise wieder entfernt, um die Übertragung von Kräften in dieser Richtung zu reduzieren bzw. zu vermeiden und dadurch die Wartungsintensität der Verbindung deutlich zu reduzieren.

Die Montagevorrichtung weist hierzu zwei Montageelemente auf, die Anschläge aufweisen, die z.B. als Platten ausgebildet sein können und einander vorzugsweise gegenüberliegen. Diese Anschläge weisen vorzugsweise einander zugewandte, orthogonal zu den Platten ausgerichtete Stempel auf, die vorzugsweise orthogonal zu den Anschlägen expandierbar sind, so dass die Ankerstäbe zweier verbundener Verbindungskörper dazwischen festgeklemmt werden können. Die Stempel können beispielsweise, wie weiter unten erläutert, als in Gewindehülsen geführte Halteelemente usgebildet sein.

Gemäß einer bevorzugten Fortbildungsform ist vorgesehen, dass die Montagevorrichtung wie folgt ausgebildet ist: mit einem ersten Montageelement, umfassend einen ersten Anschlag an dem mindestens zwei erste Gewindehülsen voneinander beabstandet mit jeweils einem Gewinde an dergleichen Seite des ersten Anschlags angeordnet sind, einem zweiten Montageelement, umfassend einen zweiten Anschlag an dem mindestens zwei untere Gewindehülsen voneinander beabstandet mit jeweils einem Gewinde an der gleichen Seite des zweiten Anschlags angeordnet sind, wobei an den ersten und zweiten Gewindehülsen jeweils ein Halteelement angeordnet ist, wobei die Halteelemente jeweils ein zu dem Gewinde der Gewindehülsen korrespondierendes Gewinde aufweisen, und die Halteelemente angeordnet und ausgebildet sind, axiale Bewegungen in Bezug auf die Mittelachse der Gewindehülse auszuführen, an der das Halteelement angeordnet ist.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Verbindungskörpers verwiesen.

Bevorzugte Ausführungsvarianten werden beispielhaft anhand der beiliegenden Figuren erläutert. Es zeigen:
- Figur 1:: eine schematische Darstellung einer Windenergieanlage;
- Figur 2:: eine horizontal geschnittene Teilansicht eines Turmabschnitts;
- Figur 3:: eine längs geschnittene Ansicht eines Verbindungskörpers;
- Figur 4:: eine vertikal geschnittene Ansicht zweier Verbindungsflansche;
- Figur 5:: eine horizontal geschnittene Ansicht zweier Verbindungsflansche;
- Figur 6:: eine weitere Ansicht eines Verbindungsflansches;
- Figur 7:: eine vertikal geschnittene Ansicht zweier Verbindungsflansche gemäß Figur 4 mit einer Montagevorrichtung; und
- Figur 8:: eine Draufsicht auf ein Montageelement der Montagevorrichtung nach Figur 7.

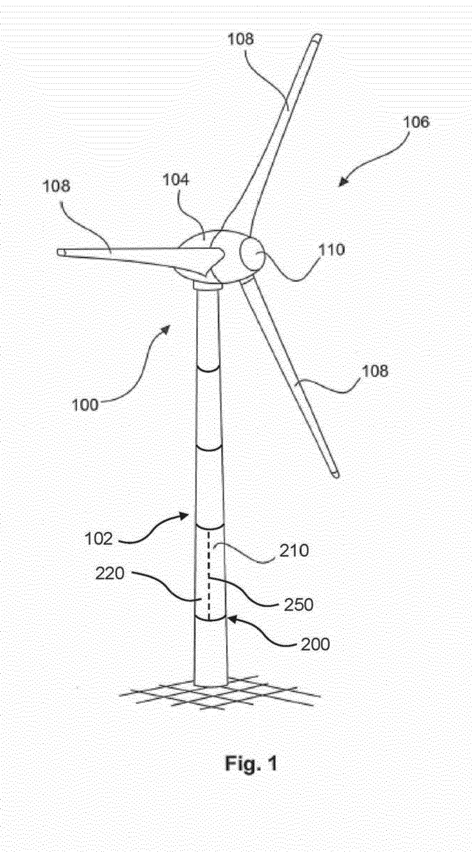

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Der Turm 102 umfasst eine Anzahl an Turmabschnitten 200, die im Wesentlichen aus einem ersten Turmringsegment 210 und einem zweiten Turmringsegment 220 bestehen. Die Turmringsegmente stoßen an einem ersten Stoß 250 und einem zweiten Stoß (nicht dargestellt) aneinander.

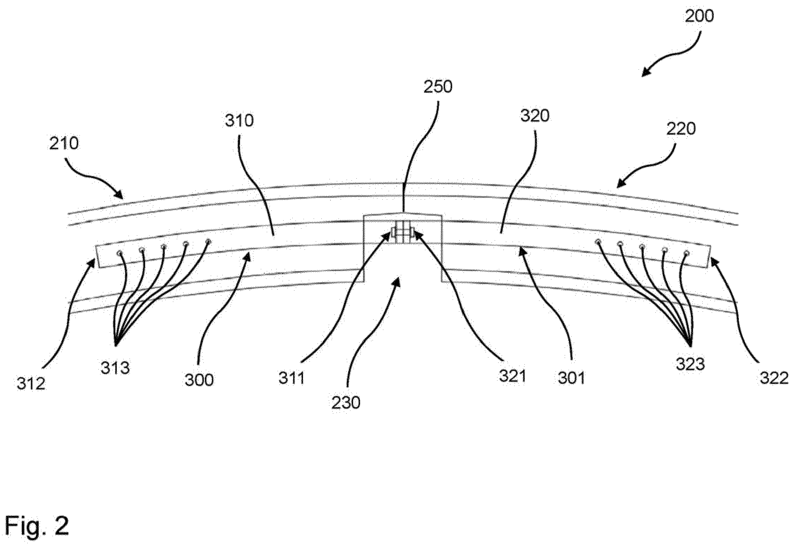

Figur 2 zeigt eine horizontal geschnittene Teilansicht eines Turmabschnitts 200. Der Turmabschnitt 200 umfasst ein erstes Turmringsegment 210 und ein zweites Turmringsegment 220. Diese stoßen an einem vertikalen Stoß 250 aneinander. Das erste Turmringsegment 210 weist einen ersten Verbindungskörper 300 und das zweite Turmringsegment 220 weist einen zweiten Verbindungskörper 301 auf.

Der erste Verbindungskörper 300 umfasst einen ersten Ankerstab 310, der sich von einem ersten Ende 311 zu einem zweiten Ende 312 erstreckt. Der Ankerstab 310 weist eine im Wesentlichen rechteckige Geometrie auf, wobei dieser eine leichte Krümmung aufweist, da der Ankerstab im Wesentlichen parallel zur Wandung des Turmringsegments 210 verläuft. Der Ankerstab weist ferner Ankerelemente 313 auf, die orthogonal zum Ankerstab 310 und parallel zu einer Längsachse des Turmabschnitts 200 verlaufen und in einem Bereich angrenzend an das zweite Ende 312 angeordnet sind. Insgesamt sind zehn Ankerelemente 313 an dem Ankerstab 310 angeordnet, von denen fünf auf der oberen Seite und fünf auf der unteren Seite angeordnet sind, wobei die untere Seite mit den Ankerelementen nicht abgebildet ist. Der erste Verbindungskörper 300 ist mit seinem zweiten Ende 312 und dem daran angrenzenden Bereich mit den Ankerelementen 313 innerhalb des ersten Turmringsegments 210 angeordnet.

Der zweite Verbindungskörper 301 weist ebenfalls einen Ankerstab 320 mit einem ersten Ende 321 und einem zweiten Ende 322 auf, wobei ebenfalls in einem an das zweite Ende 322 angrenzenden Bereich Ankerelemente 323 angeordnet sind. Der zweite Verbindungskörper 301 ist ebenfalls parallel zur Wandung des Turmringsegments 210 angeordnet und mit seinem zweiten Ende 322 und dem daran angrenzenden Bereich mit den Ankerelementen 323 innerhalb des zweiten Turmringsegments 220 angeordnet.

Ferner umfasst der Turmabschnitt 200 an dem Stoß 250 eine Aussparung 230, die zur einen Hälfte innerhalb des ersten Turmringsegments 210 und zur anderen Hälfte innerhalb des zweiten Turmringsegments eingebracht ist. Die Ankerstäbe ragen mit ihren ersten Enden 311, 321 in die Aussparung 230 hinein und sind miteinander verbunden.

Wie insbesondere in Figur 2 zu erkennen ist, ist die Form der Verbindungskörper 300, 301 angepasst auf die Ringform des Turmringsegments 200, so dass die Ankerstäbe 311, 312 entsprechend in Umfangsrichtung des Turmringsegments 200 ausgerichtet sind. Aufgrund des in der Regel im Vergleich zu den Abmessungen des Verbindungskörpers deutlich größeren Radius eines Teilringsegments bzw. Turmabschnitts lassen sich jedoch auch diese Ausführungen unter die hier beschriebenen Geometrien fassen. Insbesondere sind Angaben wie orthogonal und andere geometrische Angaben bei dieser auf die Ringform des Turmringsegments 200 angepassten Ausgestaltung der Verbindungskörper 300, 301 entsprechend angepasst zu verstehen.

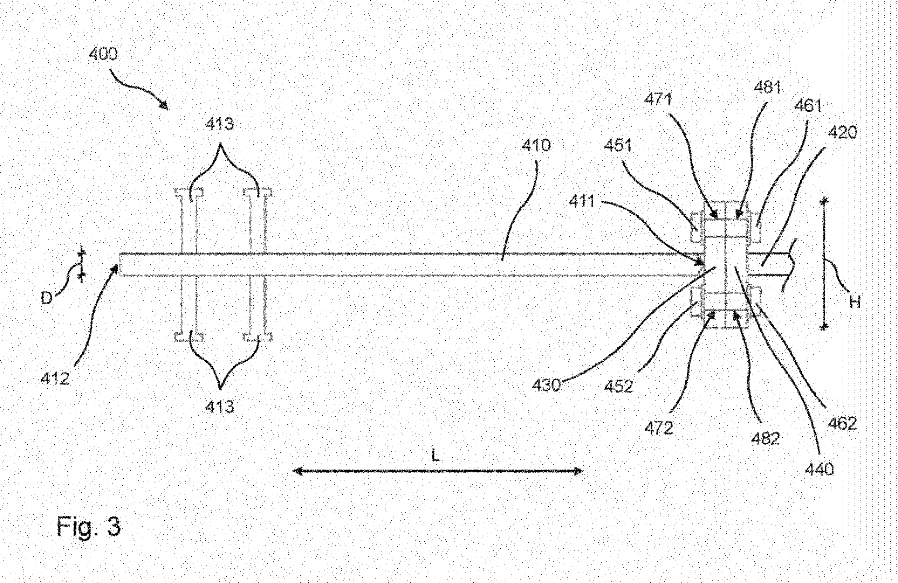

Figur 3 zeigt eine längs geschnittene Ansicht einer weiteren Ausführungsvariante eines Verbindungskörpers 400 mit einem Ankerstab 410, wobei sich der Ankerstab 410 von einem ersten Ende 411 zu einem zweiten Ende 412 longitudinal entlang einer Längserstreckung L erstreckt und orthogonal dazu eine Dicke D aufweist. Am ersten Ende 411 des Ankerstabs 410 ist ein erster Verbindungsflansch 430 angeordnet, der eine Höhe H parallel zur Dicke D des Ankerstabs 410 aufweist. Die Abmessung der Höhe H des ersten Verbindungsflansches 430 ist größer als die Dicke D des Ankerstabs 410. Die Abmessung der Höhe H des ersten Verbindungsflansches 430 ist derart gewählt, dass Befestigungsmittel 451, 452, hier Schrauben, in im Verbindungsflansch 430 eingebrachte Durchgangslöcher 471, 472 eingeführt werden können. Die Durchgangslöcher 471, 472 weisen eine Durchdringungsrichtung auf, die parallel zur longitudinalen Erstreckung des Ankerstabs 410 verläuft.

Ferner ist an dem ersten Verbindungsflansch 430 ein zweiter Verbindungsflansch 440 angeordnet. Der zweite Verbindungsflansch 440 ist ein Bestandteil eines zweiten Verbindungskörpers an dessen Ankerstab 420 der zweite Verbindungsflansch 440 angeordnet ist. Der zweite Verbindungsflansch 440 ist analog zum ersten Verbindungsflansch 430 gestaltet. Die Verbindungsflansche 430, 440 sind derart miteinander verbunden, dass das Befestigungsmittel 451 durch das obere Durchgangsloch 471 des ersten Verbindungsflansches 430 und durch das obere Durchgangsloch 481 des zweiten Verbindungsflansches 440 und das Befestigungsmittel 452 durch das untere Durchgangsloch 472 des ersten Verbindungsflansches 430 und durch das untere Durchgangsloch 482 des zweiten Verbindungsflansches 440 ein- bzw. teilweise hindurchgeführt wird. Die oberen Durchgangslöcher 471, 481 weisen einen gemeinsamen Durchtritt auf. Die unteren Durchgangslöcher 472, 482 weisen ebenfalls einen gemeinsamen Durchtritt auf. Die Befestigungsmittel 451, 452 werden auf der Austrittsseite durch korrespondierende Elemente 461, 462 gesichert, so dass eine Verbindung zwischen dem ersten und dem zweiten Verbindungsflansch 430, 440 hergestellt wird. Vorzugsweise werden als Befestigungsmittel Schrauben und als korrespondierende Elemente Muttern gewählt. Die Verbindung des ersten Verbindungsflansches 430 mit dem zweiten Verbindungsflansch 440 findet vorzugsweise in der Aussparung zweier Turmringsegmente statt. Ergänzend oder alternativ weisen die Durchgangslöcher 471, 472 und/oder die Durchgangslöcher 481, 482 Innengewinde auf, in die ein Befestigungsmittel 451, 452 eingeschraubt werden können.

In einem Bereich angrenzend an das zweite Ende 412 des ersten Ankerstabs 410 sind insgesamt vier erste Ankerelemente 413 angeordnet, die hier als Kopfbolzen ausgeführt sind. Die ersten Ankerelemente 413 erstrecken sich orthogonal von dem ersten Ankerstab 410, in eine Richtung parallel zur Dicke D des ersten Ankerstabs 410, hinweg. Auf einer Seite des ersten Ankerstabs 410 befinden sich zwei erste Ankerelemente 413 und diesen gegenüberliegend, auf der anderen Seite des ersten Ankerstabs 410, befinden sich zwei weitere erste Ankerelemente 413.

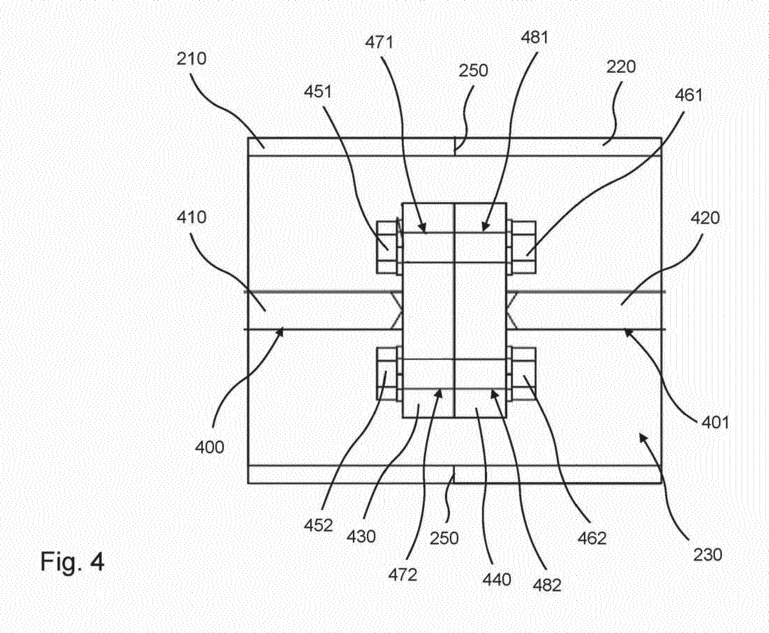

Figur 4 zeigt eine vertikal geschnittene Ansicht zweier Verbindungsflansche 430, 440, die miteinander mittels Befestigungsmitteln 451, 452 und korrespondierenden Elementen 461, 462 verbunden sind und einen Bestandteil des ersten Verbindungskörpers 400 bzw. des zweiten Verbindungskörpers 401 darstellen. Der erste Verbindungsflansch 430 ist mit dem ersten Ankerstab 410 und der zweite Verbindungsflansch 440 ist mit dem zweiten Ankerstab 420 verbunden, wobei die Verbindung innerhalb einer Aussparung 230 angeordnet ist. Da die Ankerstäbe 410, 420 in die Turmringsegmente 210, 220 (in Fig. 4 nur im Ausschnitt dargestellt) eingelassen und darin verankert sind, dient diese Anordnung dazu, die Turmringsegmente 210, 220 miteinander an dem Stoß 250 zu verbinden.

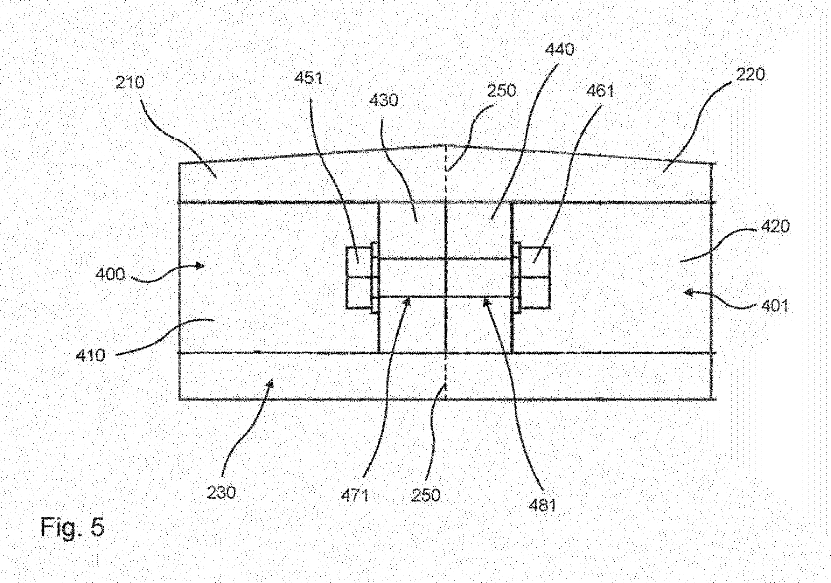

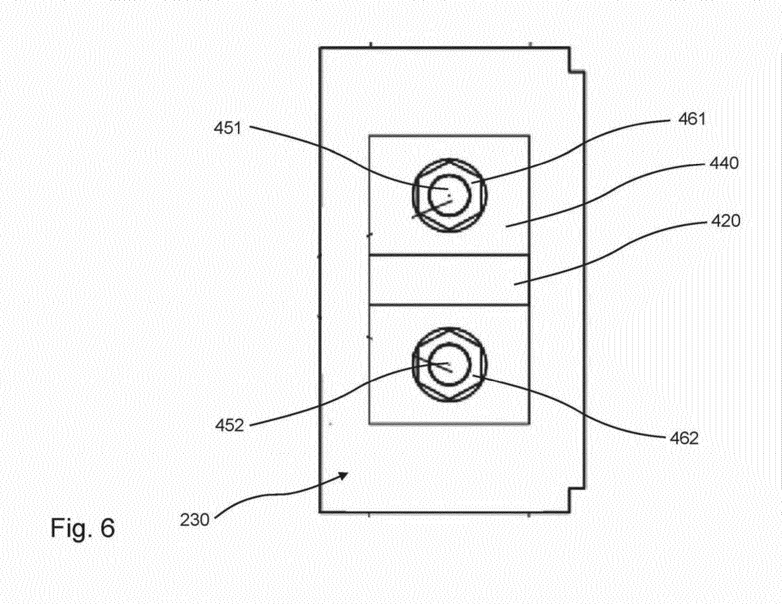

Figur 5 zeigt eine horizontal geschnittene Ansicht der beiden Verbindungsflansche 430, 440 aus Figur 4 mit dem ersten und zweiten Ankerstab 410, 420, die in der Aussparung 230 angeordnet sind. Figur 6 zeigt eine weitere Ansicht des Verbindungsflansches 440 und des Ankerstabs 420, die in der Aussparung 230 angeordnet sind.

Durch die Verbindung des ersten Verbindungskörpers 300, 400 mit dem zweiten Verbindungskörper 301, 401, wird eine wartungsarme Verbindung der Turmringsegmente 210, 220 ermöglicht. Eine wartungsarme Verbindung zeichnet sich durch im Vergleich zu konventionellen Verbindungen lange Wartungszyklen aus, bei der die Zeitspanne zwischen zwei Wartungen vergleichsweise lang ist. Daraus ergibt sich einerseits der Vorteil von geringeren Kosten durch seltenere personalintensive Wartungstätigkeiten und andererseits wird die Sicherheit der Windenergieanlage erhöht.

Die Wartungszyklen weisen bei Verwendung eines Verbindungskörpers unter anderem deswegen längere Zeitspannen auf, weil an der Verbindungsstelle, an der der erste Ankerstab 310, 410 mit dem zweiten Ankerstab 320, 420 verbunden ist, im Wesentlichen parallel zur longitudinalen Erstreckung der Ankerstäbe 310, 320, 410, 420 verlaufende Kräfte wirken. Die Verbindungsstelle ist die Stelle, an der das erste Ende 311, 411 des ersten Ankerstabs 310, 410 mit dem ersten Ende 321 des zweiten Ankerstabs 320 durch einen ersten Verbindungsflansch 430 und einen zweiten Verbindungsflansch 440 sowie die Verbindungsflansche verbindende Befestigungsmittel 451, 452 und mit diesen korrespondierende Elemente 461, 462 verbunden ist.

Die im Wesentlichen parallel zur longitudinalen Erstreckung der Ankerstäbe 310, 320, 410, 420 verlaufenden Kräfte zum Verbinden der zwei benachbarten Turmringsegmenten 210, 220 werden ferner dadurch realisiert, dass die ersten Enden 311, 321, 411 der Ankerstäbe 310, 320, 410, 420 und die Verbindungsflansche 430, 440 in einer Aussparung 230 angeordnet sind, die einen Freiraum um die longitudinale Erstreckung der Ankerstäbe 310, 320, 410, 420 bietet und so die Übertragung von Scherkräfte und/oder Schubspannungen durch bzw. auf die Verbindungskörper, insbesondere an der Stelle der Verbindungsflansche 430, 440, reduziert und so die Verbindung, vorzugsweise eine Schraubverbindung, keine oder nur sehr geringe Scherkräfte und/oder Schubspannungen aufnehmen muss. Es hat sich herausgestellt, dass eine Verbindung, die keine oder lediglich geringe Scherkräfte und/oder Schubspannungen aufnehmen muss eine deutlich geringe Wartungsintensität aufweist. Diese vorteilhafte Anordnung ist insbesondere den Figuren 4, 5 und 6 zu entnehmen. Die am Stoß 250 aufeinander treffenden Turmringsegmente 210, 220 können somit sicher und mit einer geringen Wartungsintensität verbunden werden.

Ferner ermöglicht die Aussparung 230 und die in dieser erfolgten Verbindung, vorzugsweise eine Schraubverbindung, eine einfache und sichere Prüfung der Verbindung, da diese für eine Person, die die Wartung durchführt, gut einsehbar ist. Dies resultiert zum einen darin, dass die Prüfung der Verbindung mit einem geringeren Zeitaufwand verbunden ist. Zum anderen ist die Prüfung der Verbindung durch die prüfende Person mit einer besseren Aussagekraft verbunden, da die Verbindung direkt einsehbar ist und die Prüfung somit eine höhere Validität aufweist. Damit wird die Sicherheit der Windenergieanlage 100 weiter gesteigert. Dies ist insbesondere ein Vorteil gegenüber bisherigen Verbindungen von Turmringsegmenten, die oftmals vermörtelt werden und somit uneinsehbar sind.

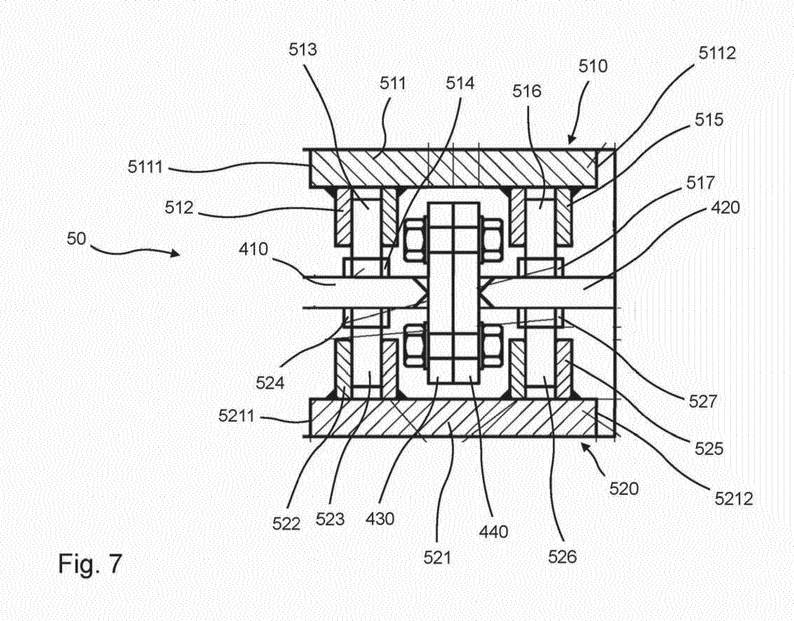

Figur 7 zeigt eine vertikal geschnittene Ansicht zweier Verbindungsflansche gemäß Figur 4 mit einer Montagevorrichtung. Die Montagevorrichtung 50 umfasst ein erstes Montageelement 510 und ein zweites Montageelement 520. Das erste Montageelement 510 umfasst einen ersten Anschlag 511, der als Platte ausgebildet ist. Der erste Anschlag 511 erstreckt sich von einem ersten Ende 5111 bis zu einem zweiten Ende 5112. In einem Bereich angrenzend an das erste Ende 5111 ist eine erste Gewindehülse 512 angeordnet (hier links dargestellt), so dass eine erste Gewindehülse 512 an dem Ende 5111 des ersten Anschlags 511 angeordnet ist, die dem ersten Ankerstab 410 zugewandt ist. Die Verbindung dieser ersten Gewindehülse 512 mit dem ersten Anschlag 511 ist hier durch eine Schweißnaht realisiert.

In einem Bereich angrenzend an das zweite Ende 5112 des ersten Anschlags 511 ist eine weitere erste Gewindehülse 515 angeordnet, welche an derselben Seite des Anschlags 511 angeordnet ist wie die andere erste Gewindehülse 512, (hier rechts dargestellt), so dass die weitere erste Gewindehülse 515 an dem Ende 5112 des ersten Anschlags 511 angeordnet ist, die dem zweiten Ankerstab 420 zugewandt ist. Die weitere erste Gewindehülse 515 weist ebenfalls ein Innengewinde auf. An der ersten Gewindehülse 512 ist darüber hinaus ein erstes Halteelement 513 und an der weiteren ersten Gewindehülse 515 ist ein weiteres erstes Halteelement 516 angeordnet. Die Halteelemente 513, 516 weisen jeweils ein zum Innengewinde der Gewindehülsen 512, 515 korrespondierendes Außengewinde auf und sind jeweils, teilweise in die Gewindehülsen eingeschraubt.

Das zweite Montageelement 520 weist grundsätzlich den gleichen Aufbau auf wie das erste Montageelement 510. Ein zweiter Anschlag 521 erstreckt sich von einem ersten Ende 5211 zu einem zweiten Ende 5212, wobei in den Bereichen angrenzend an die beiden Ende 5211 und 5212 zweite Gewindehülsen 522, 525 angeordnet sind. Die zweiten Gewindehülsen 522, 525 weisen ebenfalls ein Innengewinde auf, wobei in die zweiten Gewindehülsen 522 zweite Halteelement 523, 526 geschraubt sind. Die Halteelemente 513, 516, 523, 526 weisen in diesem Ausführungsbeispiel ferner jeweils erste bzw. zweite Sechskante 514, 517, 524, 527 auf, die an einem Ende des Halteelements angeordnet sind, das dem zugehörigen Anschlag 511, 521 abgewandt ist und somit an einem Ankerstab 410, 420 anliegen können.

Das erste und das zweite Montageelement 510, 520 wird in einer Aussparung im Bereich eines Stoßes mindestens zweier Turmringsegmente angeordnet. Die Anordnung erfolgt derart, dass die Erstreckung vom ersten Ende zum zweiten Ende im Wesentlichen parallel zur Längserstreckung der Ankerstäbe verläuft. Ferner wird das erste und das zweite Montageelement 510, 520 derart angeordnet, dass eine Mittelachse der einen ersten Gewindehülse 512 und eine Mittelachse der einen zweiten Gewindehülse 522 den ersten Ankerstab 410 schneidet. Dies resultiert darin, dass die Halteelemente 513, 523 bei ausreichender Auskraglänge an dem Ankerstab 410 anliegen. Durch ein Drehen der Halteelemente, beispielsweise an den Sechskanten 514, 524, kann durch die resultierende axiale Bewegung eine im Wesentlichen vertikale Bewegung des Ankerstabs erreicht werden.

Das gleiche Ergebnis kann durch ein Drehen des weiteren ersten Halteelements 516 und des weiteren zweiten Halteelements 526 erzielt werden, indem beispielsweise an den Sechskanten 517, 527 gedreht wird. Durch die vertikale Bewegung der Ankerstäbe können die an den Ankerstäben 430, 440 angeordneten Verbindungsflansche 430, 440 derart ausgerichtet werden, dass die in den Flanschen angeordneten oberen Durchgangslöcher 471, 481 eine gemeinsame Durchgangsachse aufweisen und die in den Flanschen angeordneten unteren Durchgangslöcher 472, 482 ebenfalls eine gemeinsame Durchgangsachse aufweisen. Dadurch ist einer Verbindung der Flansche mit Befestigungsmitteln 451, 452 und korrespondierenden Elementen 461, 462 stark vereinfacht.

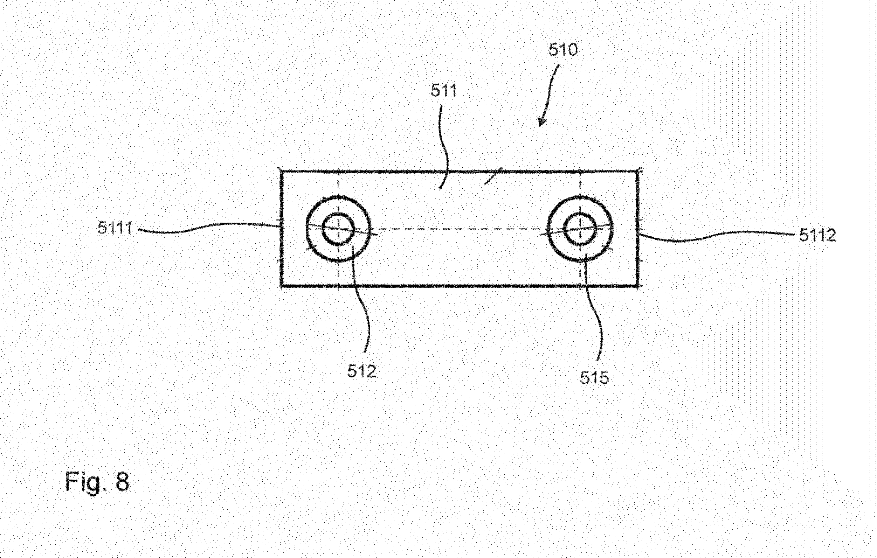

Figur 8 zeigt eine Draufsicht auf ein Montageelement der Montagevorrichtung nach Figur 7. Das Montageelement 510 weist eine Längserstreckung zwischen dem ersten Ende 5111 und dem zweiten Ende 5112 auf. Ferner weist das Montageelement 510 orthogonal zu dieser Längserstreckung eine Breite auf. Die Längserstreckung und die Breite spannen eine Fläche mit einer Flächenorthogonalen auf, wobei auf dieser Fläche die zwei ersten Gewindehülsen 512, 515 angeordnet sind, wobei eine Mittelachse der Gewindehülsen 512, 515 im Wesentlichen parallel zu der Flächenorthogonalen verläuft.

### Bezuqszeichen

- 100: Windenergieanlage
- 102: Turm
- 104: Gondel
- 106: Rotor
- 108: Rotorblätter
- 110: Spinner
- 200: Turmabschnitt
- 210: erstes Turmringsegment
- 220: zweites Turmringsegment
- 230: Aussparung
- 250: Stoß
- 300, 400: erster Verbindungskörper
- 301, 401: zweiter Verbindungskörper
- 310, 410: erster Ankerstab
- 311, 411: erstes Ende erster Ankerstab
- 312, 412: zweites Ende erster Ankerstab
- 313, 413: erste Ankerelemente
- 320, 420: zweiter Ankerstab
- 321: erstes Ende zweiter Ankerstab
- 322: zweites Ende zweiter Ankerstab
- 323: zweite Ankerelemente
- 430: erster Verbindungsflansch
- 440: zweiter Verbindungsflansch
- 451, 452: Befestigungsmittel
- 461, 462: korrespondierende Elemente
- 471, 481: obere Durchgangslöcher
- 472, 482: untere Durchgangslöcher
- 50: Montagevorrichtung
- 510: erstes Montageelement
- 511: erster Anschlag
- 512, 515: erste Gewindehülsen
- 513, 516: erste Halteelemente
- 514, 517: erste Sechskante
- 520: zweites Montageelement
- 521: zweiter Anschlag
- 522, 525: zweite Gewindehülsen
- 523, 526: zweite Halteelemente
- 524, 527: zweite Sechskante
- 5111: erstes Ende des ersten Anschlags
- 5112: zweites Ende des ersten Anschlags
- 5211: erstes Ende des zweiten Anschlags
- 5212: zweites Ende des zweiten Anschlags
- D: Dicke des Ankerstabs
- H: Höhe der Verbindungsflansche
- L: Längserstreckung

## Patentansprüche

1. Windenergieanlagen-Turmringsegment (210), wobei das
Windenergieanlagen-Turmringsegment (210) als Mantelsegment, und
vorzugsweise als Betonkörper, ausgebildet ist mit zwei Stoßstellen zum Ansetzen an Stoßstellen wenigstens eines weiteren Windenergieanlagen-Turmringsegments (220), und mit mindestens einer Aussparung (230) im Bereich jeder Stoßstelle, wobei in das Windenergieanlagen-Turmringsegment im Bereich jeder Stoßstelle jeweils ein erster Verbindungskörper (300, 400) eingelassen ist,
wobei der jeweilige erste Verbindungskörper (300, 400) umfasst einen Ankerstab (310, 410) mit einem ersten (311, 411) und einem zweiten Ende (312, 412),
einem am ersten Ende (311, 411) des Ankerstabs (310, 410) angeordneten Verbindungsflansch (430) zum Verbinden des Verbindungskörpers (300, 400) mit einem zweiten Verbindungskörper (301, 401), der in ein weiteres Windenergieanlagen-Turmringsegment (220) eingelassen ist, um hierdurch die beiden Windenergieanlagen-Turmringsegmente (210, 220) zu verbinden, zumindest um deren Verbindung zu unterstützen, und
zwei, drei oder mehrere Ankerelemente (313, 413), die in einem an das zweite Ende (312, 412) angrenzenden Abschnitt des Ankerstabs (310, 410) angeordnet sind,
wobei die Ankerelemente (313, 413) als Kopfbolzen ausgebildet sind und der Ankerstab (310, 410) orthogonal zu seiner Längsachse einen rechteckigen Querschnitt aufweist, und
wobei der jeweilige erste Verbindungskörper derart in das Windenergieanlagen-Turmringsegment eingelassen ist, dass das zweite Ende (312, 412) des Ankerstabs (310, 410) mit den als Kopfbolzen ausgebildeten Ankerelementen (313, 413) im Windenergieanlagen-Turmringsegment (210) verborgen ist und das erste Ende (311, 411) des Ankerstabs (310, 410) mit dem Verbindungsflansch (430) in die Aussparung (230) herausragt.

2. Windenergieanlagen-Turmringsegment (210) nach dem vorhergehenden Anspruch,
**dadurch gekennzeichnet, dass** sich die Ankerelemente (313, 413) im Wesentlichen orthogonal von einer Längsachse des Ankerstabs (310, 410) hinweg erstrecken.

3. Windenergieanlagen-Turmringsegment (210) nach mindestens einem der vorhergehenden Ansprüche,
**dadurch gekennzeichnet, dass** auf einer oberen Seite des Ankerstabs (310, 410) und auf einer unteren Seite des Ankerstabs (310, 410) jeweils eine gleiche Anzahl von Ankerelementen (313, 413), vorzugsweise gegenüberliegend, angeordnet ist.

4. Windenergieanlagen-Turmringsegment (210) nach mindestens einem der vorhergehenden Ansprüche,
**dadurch gekennzeichnet, dass** der Verbindungsflansch (430) zwei Öffnungen aufweist, die ausgebildet sind, jeweils von einem Befestigungsmittel (451, 452) durchdrungen zu werden, wobei die Öffnungen des Verbindungsflansches (430) vorzugsweise jeweils ein Innengewinde aufweisen.

5. Windenergieanlagen-Turmringsegment (210) nach mindestens einem der vorhergehenden Ansprüche,
**dadurch gekennzeichnet, dass** der Verbindungsflansch (430) und/oder die Ankerelemente (313, 413) stoffschlüssig mit dem Ankerstab (310, 410) verbunden sind, vorzugsweise durch Schweißen.

6. Windenergieanlagen-Turmringsegment (210) nach mindestens einem der vorhergehenden Ansprüche,
**dadurch gekennzeichnet, dass** der Verbindungsflansch (430) und/oder die Ankerelemente (313, 413) und/oder der Ankerstab (310, 410) Stahl aufweisen oder aus Stahl bestehen.

7. Windenergieanlagen-Turmabschnitt (200), umfassend mindestens ein erstes und ein zweites Windenergieanlagen-Turmringsegment (210, 220) nach mindestens einem der vorhergehenden Ansprüche, wobei die beiden Windenergieanlagen-Turmringsegmente (210, 220) jeweils als Mantelsegment, und vorzugsweise als Betonkörper, ausgebildet sind und mit ihren Stoßstellen an mindestens einem im Wesentlichen vertikalen Stoß (250) aneinanderstoßen, wobei im Bereich des Stoßes (250) die Verbindungsflansche (430, 440) der Verbindungskörper (300, 301, 400, 401) der ersten und zweiten Windenergieanlagen-Turmringsegmente (210, 220) miteinander verbunden sind.

8. Windenergieanlagen-Turmabschnitt (200) nach dem vorhergehenden Anspruch, **dadurch gekennzeichnet, dass** die Verbindungsflansche (430, 440) der Verbindungskörper (300, 301, 400, 401) der ersten und zweiten Windenergieanlagen-Turmringsegmente (210, 220) über Befestigungsmittel (451, 452), vorzugsweise lösbar, miteinander verbunden sind.

9. Windenergieanlagen-Turm (102) umfassend mehrere bestimmungsgemäß übereinander angeordnete Windenergieanlagen-Turmabschnitte (200) nach mindestens einem der beiden vorhergehenden Ansprüche, wobei vorzugsweise die Stöße (250) benachbarter Windenergieanlagen-Turmabschnitte (200) zueinander versetzt angesetzt sind

10. Windenergieanlage (100), umfassend einen Windenergieanlagen-Turm (102) nach dem vorhergehenden Anspruch.

11. Verfahren zum Herstellen eines Windenergieanlagen-Turmringsegments (210) nach mindestens einem der vorhergehenden Ansprüche 1-6, umfassend
- Vorbereiten einer Betonform oder Schalung zum Fertigen eines Windenergieanlagen-Turmringsegments (210),
- Bereitstellen eines Verbindungskörpers, umfassend
∘ einen Ankerstab (310, 410) mit einem ersten (311, 411) und einem zweiten Ende (312, 412),
∘ einem am ersten Ende (311, 411) des Ankerstabs (310, 410) angeordneten Verbindungsflansch (430) zum Verbinden des Verbindungskörpers (300, 400) mit einem zweiten Verbindungskörper (301, 401), der in ein weiteres Windenergieanlagen-Turmringsegment (220) eingelassen ist, um hierdurch die beiden Windenergieanlagen-Turmringsegmente (210, 220) zu verbinden, zumindest um deren Verbindung zu unterstützen, und
∘ zwei, drei oder mehrere Ankerelemente (313, 413), die in einem an das zweite Ende (312, 412) angrenzenden Abschnitt des Ankerstabs (310, 410) angeordnet sind,
∘ wobei die Ankerelemente (313, 413) als Kopfbolzen ausgebildet sind und der Ankerstab (310, 410) orthogonal zu seiner Längsachse einen rechteckigen Querschnitt aufweist,
- Positionieren des Verbindungskörpers (300, 400) in der Betonform oder Schalung derart, dass ein erstes Ende (311, 411) des Ankerstabs (310, 410) des Verbindungskörpers (300, 400) mit einem Verbindungsflansch (430) aus einer im Bereich einer Stoßstelle angeordneten Aussparung (230) hinausragt,
- Ausfüllen der Betonform oder Schalung mit Beton,
- Aushärten lassen des Betons,
- Entnehmen des Windenergieanlagen-Turmringsegments (210) aus der Betonform oder Schalung.

12. Verfahren zum Verbinden von zwei Windenergieanlagen-Turmringsegmenten (210, 220) zu einem Windenergieanlagen-Turmabschnitt (200) nach mindestens einem der vorhergehenden Ansprüche 7-8,
umfassend,
- Bereitstellen von mindestens einem ersten und einem zweiten Windenergieanlagen-Turmringsegment (210, 220) nach mindestens einem der vorhergehenden Ansprüche 1-6,
- Verbinden der beiden Verbindungsflansche (430, 440) des ersten und des zweiten Windenergieanlagen-Turmringsegments (210, 220) miteinander.

## Claims

1. Wind turbine tower ring segment (210), wherein the wind turbine tower ring segment (210) is configured as a jacket segment, and preferably as a concrete element, having two abutment locations for abutting abutment locations of at least one further wind turbine tower ring segment (220), and having at least one clearance (230) in the region of each abutment location, wherein in the region of each abutment location in each case a first connection element is incorporated in the wind turbine tower ring segment, wherein the respective first connection element (300, 400) comprises an anchoring bar (310, 410) having a first end (311, 411) and a second end (312, 412),
a connection flange (430), disposed on the first end (311, 411) of the anchoring bar (310, 410), for connecting the connection element (300, 400) to a second connection element (301, 401) which is incorporated in a further wind turbine tower ring segment (220) so as to, on account thereof, connect the two wind turbine tower ring segments (210, 220), at least supporting the connection of the two latter, and
two, three, or a plurality of anchoring elements (313, 413) which are disposed in a portion of the anchoring bar (310, 410) that is adjacent to the second end (312, 412), wherein the anchoring elements (313, 413) are configured as head bolts and the anchoring bar (310, 410) in a manner orthogonal to the longitudinal axis thereof has a rectangular cross section, and wherein the respective first connection element is incorporated in the wind turbine tower ring segment in such a manner that a second end (312, 412) of the anchoring bar (310, 410) by way of the anchoring elements (313, 413) configured as head bolts is hidden in the wind turbine tower ring segment (210), and the first end (311, 411) of the anchoring bar (310, 410) by way of the connection flange protrudes outward into the clearance.

2. Wind turbine tower ring segment (210)) as claimed in the preceding claim, **characterized in that** the anchoring elements (313, 413) extend away from a longitudinal axis of the anchoring bar (310, 410) in a substantially orthogonal manner.

3. Wind turbine tower ring segment (210) as claimed in at least one of the preceding claims,
**characterized in that** an identical number of anchoring elements (313, 413) are disposed, preferably so as to be mutually opposite, in each case on an upper side of the anchoring bar (310, 410) and on a lower side of the anchoring bar (310, 410).

4. Wind turbine tower ring segment (210) as claimed in at least one of the preceding claims,
**characterized in that** the connection flange (430) has two openings which are configured so as to be penetrated in each case by one fastening means (451, 452), wherein the openings of the connection flange (430) preferably have in each case one internal thread.

5. Wind turbine tower ring segment (210) as claimed in at least one of the preceding claims,
**characterized in that** the connection flange (430) and/or the anchoring elements (313, 413) are/is connected to the anchoring bar (310, 410) in a materially integral manner, preferably by welding.

6. Wind turbine tower ring segment (210) as claimed in at least one of the preceding claims,
**characterized in that** the connection flange (430) and/or the anchoring elements (313, 413) and/or the anchoring bar (310, 410) comprise/comprises steel or are/is composed of steel.

7. A wind turbine tower portion (200), comprising at least a first and a second wind turbine tower ring segment (210, 222) according to at least one of the preceding claims, wherein the two wind turbine tower ring segments (210, 220) are in each case configured as a jacket segment, and preferably as a concrete element, and by way of the abutment locations thereof abut one another at at least one substantially vertical abutment (250), wherein the connection flanges (430, 440) of the connection elements (300, 301, 400, 401) of the first and of the second wind turbine tower ring segments (210, 220) are interconnected in the region of the abutment (250).

8. The wind turbine tower portion (200) as claimed in the preceding claim, **characterized in that** the connection flanges (430, 440) of the connection elements (300, 301, 400, 401) of the first and of the second wind turbine tower ring segments (210, 220) are, preferably releasably, interconnected by way of fastening means (451, 452).

9. A wind turbine tower (102) comprising a plurality of wind turbine tower portions (200), disposed on top of one another as intended, as claimed in at least one of the two preceding claims, wherein the abutments (250) of adjacent wind turbine tower portions (200) are preferably attached so as to be mutually offset.

10. A wind turbine (100) comprising a wind turbine tower (102) as claimed in the preceding claim.

11. A method for producing a wind turbine tower ring segment, (210) as claimed at least one of the preceding claims 1-6,
comprising:
- preparing a concrete mold or a formwork for fabricating a wind turbine tower ring segment (210);
- providing a connection element comprising
∘ an anchoring bar (310, 410) having a first end (311, 411) and a second end (312, 412),
∘ a connection flange (430), disposed on the first end (311, 411) of the anchoring bar (310, 410), for connecting the connection element (300, 400) to a second connection element (301, 401) which is incorporated in a further wind turbine tower ring segment (220) so as to, on account thereof, connect the two wind turbine tower ring segments (210, 220), at least supporting the connection of the two latter, and
∘ two, three, or a plurality of anchoring elements (313, 413) which are disposed in a portion of the anchoring bar (310, 410) that is adjacent to the second end (312, 412),
∘ wherein the anchoring elements (313, 413) are configured as head bolts and the anchoring bar (310, 410) in a manner orthogonal to the longitudinal axis thereof has a rectangular cross section,
- positioning the connection element (300, 400) in the concrete mold or formwork in such a manner that a first end (311, 411) of the anchoring bar (310, 410) of the connection element (300, 400) by way of a connection flange (430) protrudes outward from a clearance (230) that is disposed in the region of an abutment location;
- filling the concrete mold or formwork with concrete;
- curing the concrete; and
- removing the wind turbine tower ring segment (210) from the concrete mold or formwork.

12. A method for connecting two wind turbine tower ring segments (210, 220) to one wind turbine tower portion, (200) as claimed in at least one of preceding claims 7 - 8,
comprising,
- providing at least a first and a second wind turbine tower ring segment (210, 220) according to at least one of the preceding claims 1-6; and
- interconnecting the two connection flanges (430, 440) of the first and of the second wind turbine tower ring segments (210, 220).

## Revendications

1. Segment annulaire de tour d'éolienne (210), dans lequel le segment annulaire de tour d'éolienne (210) est réalisé comme segment d'enveloppe, et de préférence comme corps en béton avec deux points de jonction pour le placement sur des points de jonction d'au moins un autre segment annulaire de tour d'éolienne (220), et avec au moins un évidement (230) dans la zone de chaque point de jonction, dans lequel respectivement un premier corps de liaison (300, 400) est ménagé dans le segment annulaire de tour d'éolienne dans la zone de chaque point de jonction,
dans lequel le premier corps de liaison (300, 400) concerné comporte
une barre d'ancrage (310, 410) avec une première (311, 411) et une seconde extrémité (312, 412),
une bride de liaison (430) agencée à la première extrémité (311, 411) de la barre d'ancrage (310, 410) pour la liaison du corps de liaison (300, 400) avec un second corps de liaison (301, 401) qui est ménagé dans un autre segment annulaire de tour d'éolienne (220) afin de relier par là même les deux segments annulaires de tour d'éolienne (210, 220),au moins afin de soutenir leur liaison, et
deux, trois ou plusieurs éléments d'ancrage (313, 413) qui sont agencés dans une section contiguë à la seconde extrémité (312, 412) de la barre d'ancrage (310, 410),
dans lequel les éléments d'ancrage (313, 413) sont réalisés comme des boulons de tête et la barre d'ancrage (310, 410) présente orthogonalement à son axe longitudinal une section transversale rectangulaire, et
dans lequel le premier corps de liaison concerné est ménagé dans le segment annulaire de tour d'éolienne de telle manière que la seconde extrémité (312, 412) de la barre d'ancrage (310, 410) soit dissimulée avec les éléments d'ancrage (313, 413) réalisés comme boulons de tête dans le segment annulaire de tour d'éolienne (210) et la première extrémité (311, 411) de la barre d'ancrage (310, 410) dépasse avec la bride de liaison (430) dans l'évidement (230).

2. Segment annulaire de tour d'éolienne (210) selon la revendication précédente,
**caractérisé en ce que** les éléments d'ancrage (313, 413) s'étendent de manière sensiblement orthogonale à un axe longitudinal de la barre d'ancrage (310, 410).

3. Segment annulaire de tour d'éolienne (210) selon au moins l'une des revendications précédentes,
**caractérisé en ce que** respectivement un même nombre d'éléments d'ancrage (313, 413) est agencé de préférence à l'opposé sur un côté supérieur de la barre d'ancrage (310, 410) et sur un côté inférieur de la barre d'ancrage (310, 410).

4. Segment annulaire de tour d'éolienne (210) selon au moins l'une des revendications précédentes,
**caractérisé en ce que** la bride de liaison (430) présente deux ouvertures qui sont réalisées afin d'être traversées respectivement par un moyen de fixation (451, 452), dans lequel les ouvertures de la bride de liaison (430) présentent de préférence respectivement un filet intérieur.

5. Segment annulaire de tour d'éolienne (210) selon au moins l'une des revendications précédentes,
**caractérisé en ce que** la bride de liaison (430) et/ou les éléments d'ancrage (313, 413) sont reliés par matière à la barre d'ancrage (310, 410), de préférence par soudage.

6. Segment annulaire de tour d'éolienne (210) selon au moins l'une des revendications précédentes,
**caractérisé en ce que** la bride de liaison (430) et/ou les éléments d'ancrage (313, 413) et/ou la barre d'ancrage (310, 410) présentent de l'acier ou sont en acier.

7. Segment annulaire de tour d'éolienne (200) comprenant au moins un premier et un second segment annulaire de tour d'éolienne (210, 220) selon au moins l'une des revendications précédentes, dans laquelle les deux sections annulaires de tour d'éolienne (210, 220) sont réalisées respectivement comme segment d'enveloppe, et de préférence comme corps en béton et avec leurs points de jonction butent l'une contre l'autre sur au moins un joint (250) sensiblement vertical, dans lequel dans la zone du joint (250) les brides de liaison (430, 440) des corps de liaison (300, 301, 400, 401) des premier et second segments annulaires de tour d'éolienne (210, 220) sont reliées entre elles.

8. Section de tour d'éolienne (200) selon la revendication précédente, **caractérisée en ce que** les brides de liaison (430, 440) des corps de liaison (300, 301, 400, 401) des premier et second segments annulaires de tour d'éolienne (210, 220) sont reliées entre elles par des moyens de fixation (451, 452) de préférence de manière amovible.

9. Tour d'éolienne (102) comprenant plusieurs sections de tour d'éolienne (200) agencées selon les dispositions les unes au-dessus des autres selon au moins l'une des deux revendications précédentes, dans laquelle de préférence les joints (250) de sections de tour d'éolienne (200) contiguës sont placés en déport les uns des autres.

10. Éolienne (100) comprenant une tour d'éolienne (102) selon la revendication précédente.

11. Procédé de fabrication d'un segment annulaire de tour d'éolienne (210) selon au moins l'une des revendications précédentes 1 à 6, comprenant
- la préparation d'un moule en béton ou le coffrage pour la fabrication d'un segment annulaire de tour d'éolienne (210),
- la fourniture d'un corps de liaison comprenant
o une barre d'ancrage (310, 410) avec une première (311, 411) et une seconde extrémité (312, 412),
o une bride de liaison (430) agencée à la première extrémité (311, 411) de la barre d'ancrage (310, 410) pour la liaison du corps de liaison (300, 400) avec un second corps de liaison (301, 401) qui est ménagé dans un autre segment annulaire de tour d'éolienne (220) afin de relier par là même les deux segments annulaires de tour d'éolienne (210, 220), au moins afin de soutenir leur liaison, et
o deux, trois ou plusieurs éléments d'ancrage (313, 413) qui sont agencés dans une section contiguë à la seconde extrémité (312, 412) de la barre d'ancrage (310, 410),
o dans lequel les éléments d'ancrage (313, 413) sont réalisés comme boulons de tête et la barre d'ancrage (310, 410) présente de manière orthogonale à son axe longitudinal une section transversale rectangulaire,
- le positionnement du corps de liaison (300, 400) dans le moule en béton ou le coffrage de telle manière qu'une première extrémité (311, 411) de la barre d'ancrage (310, 410) du corps de liaison (300, 400) dépasse avec une bride de liaison (430) d'un évidement (230) agencé dans la zone d'un point de jonction,
- le remplissage de la forme de béton ou le coffrage avec du béton,
- le durcissement du béton,
- le retrait du segment annulaire de tour d'éolienne (210) du moule en béton ou le coffrage.

12. Procédé de liaison de deux segments annulaires de tour d'éolienne (210, 220) en une section de tour d'éolienne (200) selon au moins l'une des revendications précédentes 7 à 8,
comprenant
- la fourniture d'au moins un premier et second segment annulaire de tour d'éolienne (210, 220) selon au moins l'une des revendications précédentes 1 à 6,
- la liaison des deux brides de liaison (430, 440) du premier et du second segment annulaire de tour d'éolienne (210, 220) entre elles.
